# EUROPEAN PATENT APPLICATION

(11) **EP 4 439 778 A1**
(43) Date of publication of application: **02.10.2024**
(21) Application number: 24163755.2
(22) Date of filing: 15.03.2024
(51) Int. Cl.: H01M 10/42, H01M 10/48, H02J 7/00

(54) **BATTERY PACK, POWER TOOL SYSTEM AND COMMUNICATION SYSTEM THEREOF**

(30) Priority: 29.03.2023 CN 202310324038
(71) Applicant: Techtronic Cordless GP, Anderson, SC 29621 (US)
(72) Inventor: ZHANG, Ye, Dongguan City (CN); WANG, Ren Jie, Dongguan City (CN); WEN, Chao, Dongguan City (CN); MA, Hai Bo, Kwai Chung (HK)
(74) Representative: Parker, Andrew James

(57) **Abstract**

The present invention provides a battery pack electrically connectable to an external device for power supply or charging, wherein the battery pack comprises a temperature terminal and is configured such that when the external device is electrically connected to the battery pack, the external device can detect the temperature of the battery pack through the temperature terminal, and the battery pack is further configured to receive a PWM signal from the external device through the temperature terminal when in the electrical connection state, and, on the basis of the PWM signal, determine the type and/or operating state of the external device. The present invention further provides a power tool system comprising the battery pack, as well as a communication system for the battery pack and the power tool system. With a battery pack and a power tool system according to the present invention, it is possible to perform both a temperature sampling function and a function of identifying external device information only by the temperature terminal of the battery pack, thus same have the advantages of a simple and compact structure and low cost.

## Description

### Technical Field

The present invention relates to a battery pack, a power tool system and a communication system thereof, wherein the battery pack may be used for supplying power to a power tool and may be charged by a charging device.

### Background Art

When there is no fixed power supply or it is not convenient to directly supply power, a battery pack is usually attached to an electrical device for power supply. Examples of the electrical device may be power tools that need to be moved frequently, household cleaning devices, kitchen devices, medical devices or the like. In addition, after the charge level of the battery pack is depleted, the battery pack may also be connected to a charging device for charging. Usually, for energy conservation, a battery pack is in a power-off or sleep state when not in use, and, when an external device (an electrical device or charging device) is connected through a connection port of the battery pack, the battery pack is electrically connected to the external device and performs charging, supplying power, and other operations.

Typically, it is necessary to detect temperatures of a battery pack, so specialized temperature measuring components are needed.

In addition, a battery pack needs to identify an external device when it is connected thereto, to perform corresponding operations, such as deciding whether to perform power supply or charging operations, or whether to interrupt power supply or charging operations, etc. To fulfill this function, installing an additional communication component in a connection port of a battery pack is usually considered. As a result, the structure and connection circuit of the connection port become more complex, and the connection port becomes larger; in another aspect, the increase in the number of components leads to an increase in costs.

Therefore, it is hoped to provide an improved battery pack, a power tool system and a communication system thereof, and a communication system and method, so that a battery pack can perform temperature detection and communication functions while remaining compact and low-cost.

### Summary of the Invention

An objective of the present invention is to provide a communication system for a battery pack or power tool system, such that during the use of the battery pack or power tool system, a temperature sampling function and a function of identifying external device information (for example, the identity or operating state of an external device, etc.) may be performed through the same terminal alone, which allows for the use of an existing battery pack structure to fulfill device identification and communication functions without the need for any additional communication terminals, thereby achieving goals such as a battery pack that has a simple structure, and is compact, and low-cost.

To achieve at least the above obj ectives, according to one aspect of the present invention, a battery pack is provided that is operable to be electrically connected to an external device for power supply or charging. the battery pack comprising a temperature terminal, wherein the battery pack is configured such that when the external device is electrically connected to the battery pack, the external device can detect the temperature of the battery pack through the temperature terminal, and, wherein the battery pack is further configured to receive a PWM signal from the external device through the temperature terminal when in the electrical connection state, and, on the basis of the PWM signal, determine the type and/or operating state of the external device.

In some embodiments, the battery pack further comprises a storage device and a control device, wherein the storage device stores a list composed of predetermined PWM signals and predetermined corresponding relationships between different PWM signals and different types and/or operating states of the second device, and, wherein the control device is configured to compare a PWM signal received from the external device through the temperature terminal with a PWM signal stored in the list in the storage device, and determine the type and/or operating state of the external device on the basis of a comparison result.

In some embodiments, in each cycle of the PWM signal, the external device performs temperature detection during a high voltage level and does not perform the temperature detection during a low voltage level.

In some embodiments, the frequency of the PWM signal is associated with the type of the external device.

In some embodiments, the duty cycle of the PWM signal is associated with the operating state of the external device.

In some embodiments, the external device comprises an external device of a first type and an external device of a second type, wherein the PWM signal has a first frequency when the external device is of the first type and has a second frequency when the external device is of the second type, wherein the first frequency is different from the second frequency.

In some embodiments, the external device of a first type is an electrical device that obtains power from the battery pack, and the external device of a second type is a charging device that charges the battery pack.

In some embodiments, the external device of a first type is a first electrical device that obtains power from the battery pack, and the external device of a second type is a second electrical device that obtains power from the battery pack.

In some embodiments, an operating state of the external device comprises a first operating state and a second operating state, wherein, when the external device is in the first operating state, the PWM signal has a first duty cycle, and wherein, when the external device is in the second operating state, the PWM signal has a second duty cycle, wherein, the first duty cycle is different from the second duty cycle.

In some embodiments, the first operating state is a normal working state, and the second operating state is an overtemperature protection state.

In some embodiments, the battery pack further comprises a display device configured to receive a type and/or operating state of the external device from the control device and display same to a user.

In some embodiments, the battery pack comprises a temperature sensor for detecting temperature information about the battery pack, wherein the temperature sensor is electrically connected to the temperature terminal and configured to transmit the temperature information to the temperature terminal.

According to another aspect of the present invention, a power tool system is provided, comprising a battery pack as described above and an external device configured to be operable to be electrically connected to the battery pack for power supply or charging.

According to yet another aspect of the present invention, a communication system is provided that is for communication between a first device and a second device, the communication system comprising a temperature terminal in the first device, wherein the communication system is configured such that when the first device is electrically connected to the second device, the second device can control the temperature terminal to detect the temperature of the first device, and, wherein the communication system is further configured to, when in the electrical connection state, allow the first device to receive a PWM signal from the second device through the temperature terminal, and determine the type and/or operating state of the second device on the basis of the PWM signal received from the second device.

With a communication system according to the present invention, as well as a battery pack and power tool system using the communication system, at least the following beneficial effect is achievable: a PWM signal generated by an external device is received through an existing terminal (namely, a temperature terminal) in an existing battery pack structure, so that temperature information may be transmitted from the battery pack to the external device and information about the external device may be transmitted to the battery pack through the same terminal, without the need to specially arrange any additional new communication terminals for allowing the battery pack to identify information (such as type and/or operating state) of the external device. With this arrangement in the present invention, a function of identifying an external device may be fulfilled simply by applying a PWM signal to an existing temperature terminal in an existing battery pack without modifying the existing battery pack structure, so that the battery pack has advantages such as a simple and compact structure and a low cost.

### Brief Description of the Drawings

For a better understanding of the above and other objects, features, advantages and functions of the present invention, reference may be made to the preferred embodiments shown in the drawings. In the drawings, identical reference signs denote identical components. It should be understood by a person skilled in the art that the drawings are intended to schematically illustrate preferred embodiments of the present invention, without imposing any restrictions on the scope of the present invention, and that the components in the drawings are not drawn to scale.
Fig. 1 is a schematic diagram of a battery pack according to the present invention, as well as an electrical device and a charging device that are operable to be connected to the battery pack;
Fig. 2 is a schematic diagram of a battery pack according to the present invention when connected to an electrical device;
Fig. 3 is a schematic diagram of the battery pack according to the present invention when connected to a charging device.

### Key to reference signs:

- 100: Battery pack
- 110: Cover
- 120: Housing
- 130: Battery unit
- 140: Control unit
- 141: Controller of battery pack
- 142: Storage of battery pack
- 150: Connection unit
- 151: Positive discharge terminal
- 152: Negative discharge terminal
- 153: Positive charging terminal
- 154: Negative charging terminal
- 155: Communication terminal of battery pack
- 156: Temperature terminal
- 157: Temperature sensor
- 200: Electrical device
- 201: Positive terminal of electrical device
- 202: Negative terminal of electrical device
- 203: Communication terminal of electrical device
- 204: Temperature receiving terminal of electrical device
- 206: Controller of electrical device
- 300: Charging device
- 301: Positive terminal of charging device
- 302: Negative terminal of charging device
- 303: Communication terminal of charging device
- 304: Temperature receiving terminal of charging device
- 306: Controller of charging device

### Specific Embodiments

Specific embodiments of the present invention are now described in detail with reference to the drawings. The embodiments described here are merely preferred embodiments according to the present invention. A person skilled in the art could conceive of other ways of implementing the present invention on the basis of the preferred embodiments, and such other ways shall likewise fall within the scope of the present invention.

According to one aspect of the present invention, a communication system is provided, which may be used to allow communication between a first device and a second device. A communication system of the present invention comprises a temperature terminal in the first device, and the communication system is configured such that when the first device is electrically connected to the second device, the second device can control the temperature terminal to detect the temperature of the first device. The communication system is further configured to, when in the electrical connection state, allow the first device to receive a PWM signal from the second device through a temperature terminal in the first device, and determine the type and/or operating state of the second device on the basis of the PWM signal received from the second device.

The first and second devices mentioned above may be any devices that a person skilled in the art may conceive of for communication using the communication system described above, such as a battery pack and an external device (the external device may be an electrical device and/or a charging device, for example). The present invention will be described below taking only battery packs and external devices as examples. It should be noted that the following descriptions are only illustrative and not restrictive.

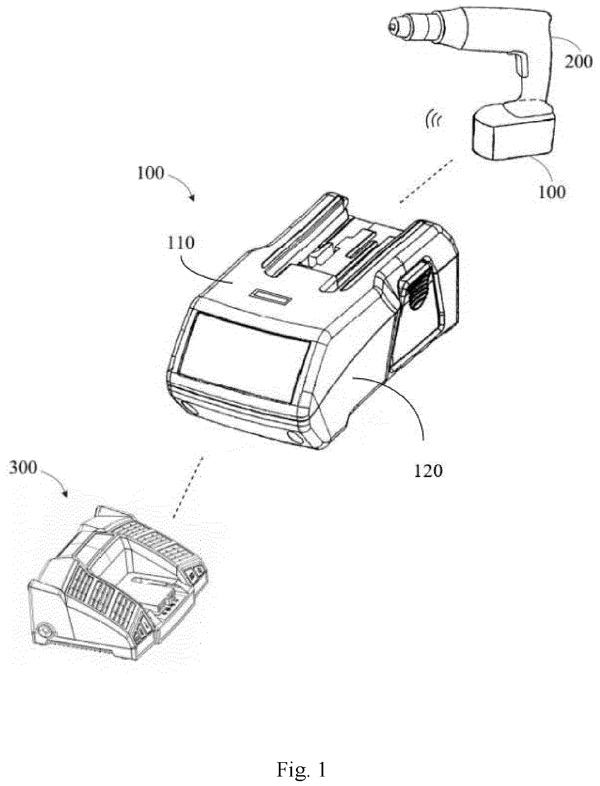

As shown in Fig. 1, according to a preferred embodiment, a battery pack 100 is electrically and physically connectable to an electrical device 200 and/or a charging device 300 for power supply and/or charging. The battery pack 100 comprises a cover 110, a housing 120, and a battery pack internal structure accommodated in an accommodating space formed jointly by the cover 110 and the housing 120.

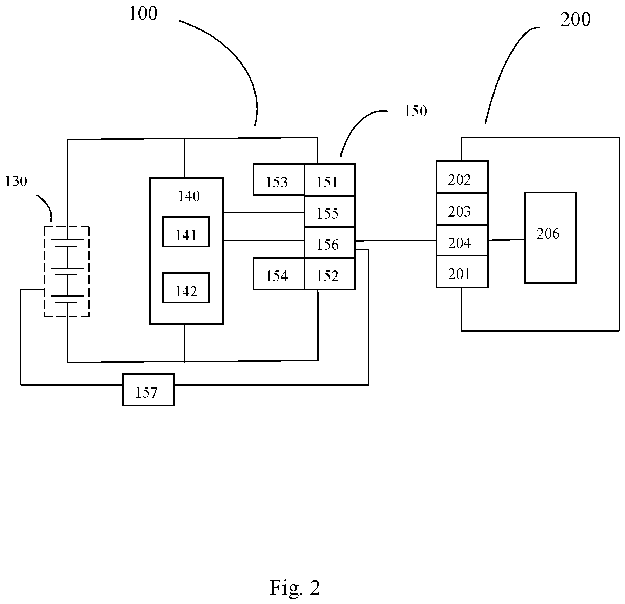

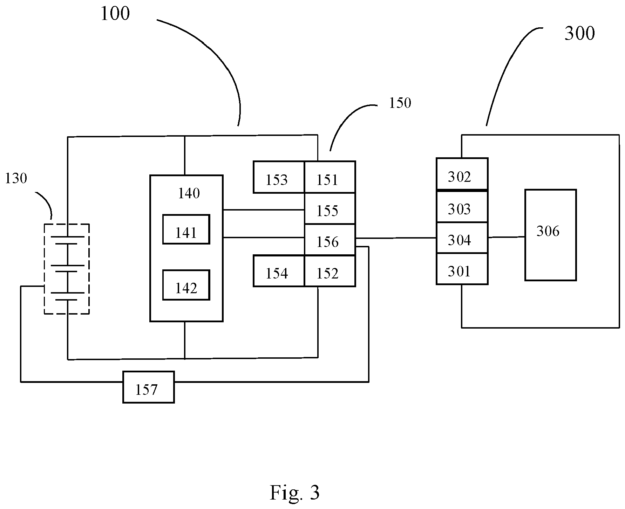

Further, refer to Fig. 2 or Fig. 3, which respectively show the connection status between the battery pack 100 and the electrical device 200, as well as the connection status between the battery pack and the charging device 300. The battery pack 100 comprises a battery unit 130 composed of one or more battery cells and used for storing electrical energy. In this embodiment, the battery unit 130 comprises three battery cells connected in series, but it is understandable that in another embodiment, battery cells in another number or connected in another manner may be arranged in the battery unit 130 as needed. The battery pack internal structure further comprises a control unit 140 located above the battery unit 130 and electrically connected to the battery unit 130, for performing various control operations on the battery unit 130, the control unit 140 comprising a printed circuit board; and a connection unit 150 extending in the direction of the cover 110, located on the printed circuit board and electrically connected thereto, for connecting to an external device for operations such as power supply or charging. The connection unit 150 comprises a plurality of connection terminals extending from the circuit board toward the cover 110, which are accommodated in an outwardly protruding accommodating space of the cover 110, forming a connection port structure that is connectable to another complementary connection port structure on the electrical device 200 or charging device 300, thereby fixing the battery pack 100 to these devices so that while a physical connection is established, electrical connections are established between the terminals corresponding thereto, which allows charging or power supply operations.

Specifically, the electrical device 200 may be a power tool, a household cleaning device, a kitchen device, a medical device, etc. Preferably, the cells of the battery unit 130 may be rechargeable secondary cells. The battery pack 100 may be connected to a charging device 300 for charging when the charge level drops.

Further, according to a preferred embodiment, the connection unit 150 comprises a plurality of connection terminals: a positive terminal and a negative terminal, which are used for electrically connecting to the corresponding positive and negative terminals on the electrical device 200 to supply power to the electrical device 200, and also for electrically connecting to the corresponding positive and negative terminals on the charging device 300 so that the battery pack 100 is charged by the charging device 300; a communication terminal 155 for communication, for example, identity verification, with an external device, wherein a further operation, for example, supplying power or charging, can continue between the battery pack and the external device only when both parties have passed the identity verification, namely when a "handshake is successful"; and a temperature terminal 156, which is electrically connected to a temperature sensor 157 located near a battery cell 130 inside the battery pack 100 to receive temperature information detected by the temperature sensor 157 about the battery pack, and is electrically connected to the corresponding temperature receiving terminal on the external device to form a temperature detection loop, thereby transmitting the temperature information to the external device to achieve a temperature detection function. Preferably, the positive and negative terminals of the battery pack 100 described above may be fast charging and discharging terminals. In one embodiment, different terminals may also be arranged to fulfill corresponding functions, wherein, for example, charging terminals (for example, positive and negative charging terminals 153, 154) and discharge terminals (for example, positive and negative discharge terminals 151, 152) may be independently arranged. The temperature sensor may be any type of temperature sensor that a person skilled in the art may conceive of, and an NTC sensor is preferred in this embodiment.

Further, in the present invention, the temperature terminal 156 of the battery pack 100, besides allowing the battery pack 100 to transmit temperature information to an external device when the battery pack 100 is electrically connected to the external device, enables the battery pack 100 to identify relevant information about the external device, especially the type (identity information) and/or operating state of the external device. In other words, when in an electrical connection state, the battery pack 100 transmits temperature information about the battery pack measured by the temperature sensor 157 to an external device through the temperature terminal 156, and, during temperature detection and temperature information transmission, it is also possible to receive a signal generated by the external device through the same temperature terminal 156, the signal providing specific information about the external device, such as the type and operating state of the device. In a preferred embodiment of the present invention, the signal is a PWM signal, and it is understandable that the signal may also be another type of signal as long as it may be transmitted by a temperature terminal and provide specific information related to an external device, so a person skilled in the art can choose various types of signals as needed to provide specific information related to external devices.

In a preferred embodiment of the present invention, an external device generates a PWM signal at the temperature terminal 156 of the battery pack in the following manner: when the battery pack 100 is electrically connected to the external device, the controller in the external device can control the operating mode of temperature detection, for example, controlling when temperature detection is performed or when temperature detection is stopped. The temperature detection may be performed intermittently, and, for example, the controller of the external device can perform temperature detection at a certain frequency and for a certain duration, wherein, during temperature detection, the temperature terminal 156 of the battery pack 100 is set to a high voltage level, and when no temperature detection is performed, the temperature terminal 156 is set to a low voltage level, so a specific PWM signal is formed at the temperature terminal 156 of the battery pack (temperature detection is performed during a high voltage level of each cycle of the PWM signal, and no temperature detection is performed during a low voltage level).

Further, the control unit 140 of the battery pack 100 is configured to analyze the above PWM signal received through the temperature terminal 156. By analyzing the PWM signal, specific information related to the external device that generated the signal, such as the type and/or operating state of the device, may be obtained, so that different response operations, such as charging or discharging, starting or stopping charging/discharging, may be performed on the basis of this information.

Further, different parameters of the PWM signal can indicate different information about the external device. In a preferred embodiment, the frequency of the PWM signal can indicate the type of the external device, for example, indicating whether the device is an electrical device 200 or a charging device 300, or more specifically, it can indicate what type or specification of electrical or charging device the device is; in addition, the duty cycle of the PWM signal can indicate the operating mode of the external device, for example, indicating whether the device is in a normal operating state or in an overtemperature protection state, an abnormal device state, or another operating state that a person skilled in the art may set as needed. It is understandable that information about an external device and parameters indicating the information are not limited to the type, operating state, or corresponding frequency and duty cycle described herein, and that a person skilled in the art can use other types of signals and the parameters provided by the signals as needed to indicate other specific information about external devices, for example, different information may be indicated by defining PWM signals different from those disclosed herein, without departing from the scope of the present invention. The examples described below are for illustrative purposes only, rather than being construed as limitations to the present invention.

In a preferred embodiment, after the battery pack 100 receives the PWM signal through the temperature terminal 156, its control unit 140 compares the signal with various PWM signals prestored in the battery pack and information about the external device corresponding thereto, thereby determining the information provided by the PWM signal, such as the type and operating state of the device. After the external device information is confirmed, the control unit of the battery pack 100, in response to different information, performs different operations.

Further, the battery pack 100 further comprises a display device, for example, a display screen or indicator light. The display device can display information about an external device, obtained by analyzing PWM signals, to users in various forms. It is understandable that a person skilled in the art can choose, as needed, any type of display device that can display the above information to users.

The present invention will be described below in further detail taking an electrical device 200 and a charging device 300 as examples. Firstly, refer to Fig. 2, which is a schematic diagram of a battery pack 100 according to the present invention when connected to an electrical device 200, with the battery pack 100 connected to the electrical device 200, wherein the electrical device 200 comprises a connection portion corresponding to a connection unit 150 of the battery pack 100, the portion comprising a negative and a positive terminal 202, 201 configured to be operable to be correspondingly connected to the positive and negative terminal 151, 152 of the battery pack 100, for obtaining power from the battery pack 100; a communication terminal 203 of the electrical device 200, which is operable to be connected to the communication terminal 155 of the battery pack 100, wherein the two may be electrically connected for mutual identity verification, and, when the verification is successful, that is, when a "handshake is successful", the battery pack 100 is securely connected to the electrical device 200 and can perform subsequent operations; and a temperature receiving terminal 204 that is operable to be correspondingly connected to the temperature terminal 156 on the battery pack 100.

Further, continuing to refer to Fig. 2, the electrical device 200 further comprises a controller 206, wherein when the battery pack 100 is electrically connected to the electrical device 200, the battery pack is turned on (that is, it is no longer in power-off/sleep mode), at which point the controller 206 of the electrical device can control the battery pack to perform temperature detection and transmit temperature information to the electrical device through the temperature terminal 156 and the temperature receiving terminal 204, thereby continuously or intermittently monitoring the temperature of the battery pack. Specifically, the controller 206 of the electrical device can control the temperature detection of the battery pack 100 in a specific mode to form a PWM signal at the temperature terminal 156 of the battery pack. For example, the electrical device 200 controls the battery pack 100 to perform temperature detection in a cycle of 50 ms, which means that the frequency of the generated PWM signal is 20 Hz. Further preferably, the PWM signal generated by the electrical device 200 can also vary depending on the operating state of the device. Specifically, the controller 206 of the electrical device 200 can analyze battery pack temperature information it receives from the battery pack temperature terminal 156, for example, by comparing the information with a prestored temperature threshold to set its operating state. The duty cycles of PWM signals generated by the electrical device 200 in different operating states vary. For example, when the electrical device 200 is operating in a normal state, the forward duty cycle of a PWM signal generated thereby at the temperature terminal 156 may be 50%, which means that the proportion of time that the electrical device 200 undergoes temperature detection and the proportion of time that it does not undergo temperature detection in each cycle in a normal operating state are the same, for example, the duration in which detection is performed (when the temperature terminal 156 is at a high voltage level) is 25 ms, and the duration in which no detection is performed subsequently (when the temperature terminal 156 is at a low voltage level) is also 25 ms; when the electrical device 200 is in an overtemperature protection state, the forward duty cycle may be 60% (which means that in each cycle, detection lasts 30 ms and non-detection lasts 20 ms). The electrical device 200 may comprise different types of devices, such as electric drills, mixers, and hair dryers. Each type of device corresponds to a preset different PWM signal.

Further, the control unit 140 of the battery pack 100 comprises a controller 141 and a memory 142, wherein the memory 142 stores a list composed of a plurality of predetermined PWM signals and predetermined information (such as type or state) about external devices corresponding to each parameter of each PWM signal. When the battery pack 100 receives the PWM signal, the controller 141 of the battery pack compares the signal with the predetermined PWM signals in a list called from the memory 142 one by one to determine the required information and gives a response accordingly. For example, in this embodiment, when the controller 141 of the battery pack makes a comparison and determines that the received PWM signal matches a predetermined PWM signal with a frequency of 20 Hz and a forward duty cycle of 50% in the memory 142, it can determine the type of the external device that emits the signal and that its operating state is normal; when the frequency is 20 Hz and the forward duty cycle is 60%, the controller 141 of the battery pack can determine that the type of the external device is an electrical device and that the external device is operating in an overtemperature protection state.

Further, the battery pack is further provided with a display device, for example, a display screen or indicator light, which can obtain analyzed and determined external device information from the controller 141 and display the information to a user.

Fig. 3 is a schematic diagram of the battery pack 100 according to the present invention when connected to the charging device 300. The method of connection as well as modes of temperature detection and communication between the charging device 300 and the battery pack 100 are similar to those described above for the electrical device 200, so, for the sake of brevity, no similar descriptions will be provided again herein. The positive and negative terminals 301 and 302 of the charging device 300 are connected to the negative and positive terminals 151 and 152 of the battery pack, respectively. In addition, in a preferred embodiment, the frequency of a PWM signal generated by the charging device 300, unlike that of the aforementioned electrical device 300, may be 10 Hz, namely a cycle of 100 ms. In addition, similar to the aforementioned electrical device 200, when the forward duty cycle is 50%, this indicates that the charging device 300 is in a normal operating state, while when the forward duty cycle is 60%, this indicates that it is in an overtemperature protection state.

In another aspect, the present invention further provides a power tool system comprising a combination of a battery pack 100 as described above and an external device, the external device being the aforementioned electrical device 200 and/or charging device 300, for example.

In yet another aspect, the present invention further provides a communication method for communication between a first device and a second device. The first and second devices may be battery packs and external devices described above, such as electrical devices or charging devices, or any devices that may be conceived of by a person skilled in the art for use in communication by the present communication method. The communication method comprises enabling the second device to detect the temperature of the first device through a temperature terminal when the first device is electrically connected to the second device; and, when in the above electrical connection state, enabling the first device to receive a PWM signal from the second device through a temperature terminal, and determining the type and/or operating state of the second device on the basis of the PWM signal received from the second device.

The above description of various embodiments of the present invention is provided to a person of ordinary skill in the relevant art for descriptive purposes. The present invention is not intended to be exclusive or limited to a single disclosed embodiment. On the basis of what is described above, a person of ordinary skill in the art will understand various substitutes for and variants of the present invention. Therefore, although some alternative embodiments have been described specifically, a person of ordinary skill in the art will understand, or develop with relative ease, other embodiments. The present invention is intended to include all substitutes for, alterations to, and variants of the present invention described herein, as well as other embodiments falling within the spirit and scope of the present invention described above.

## Claims

1. A battery pack (100) operable to be electrically connected to an external device for power supply or charging, **characterized in that** the battery pack (100) comprises a temperature terminal (156),
wherein the battery pack (100) is configured such that when the external device is electrically connected to the battery pack (100), the external device can detect the temperature of the battery pack through the temperature terminal (156), and,
wherein the battery pack (100) is further configured to receive a PWM signal from the external device through the temperature terminal when in the electrical connection state, and, on the basis of the PWM signal, determine the type and/or operating state of the external device.

2. The battery pack (100) as claimed in claim 1, **characterized in that** the battery pack (100) further comprises a storage device (142) and a control device (141),
wherein the storage device (142) stores a list composed of predetermined PWM signals and predetermined corresponding relationships between different PWM signals and different types and/or operating states of the external device, and,
wherein the control device (141) is configured to compare a PWM signal received from the external device through the temperature terminal (156) with a PWM signal stored in the list in the storage device (142) and determine the type and/or operating state of the external device on the basis of a comparison result.

3. The battery pack (100) as claimed in claim 1, **characterized in that** in each cycle of the PWM signal, the external device performs temperature detection during a high voltage level and does not perform the temperature detection during a low voltage level.

4. The battery pack (100) as claimed in claim 1, **characterized in that** the frequency of the PWM signal is associated with the type of the external device, wherein,
preferably the external device comprises an external device of a first type and an external device of a second type, wherein the PWM signal has a first frequency when the external device is of the first type and has a second frequency when the external device is of the second type, wherein the first frequency is different from the second frequency, and wherein,
optionally the external device of a first type is an electrical device (200) that obtains power from the battery pack, and the external device of a second type is a charging device (300) that charges the battery pack, or optionally the external device of a first type is a first electrical device that obtains power from the battery pack, and the external device of a second type is a second electrical device that obtains power from the battery pack.

5. The battery pack (100) as claimed in claim 1, **characterized in that** the duty cycle of the PWM signal is associated with the operating state of the external device, wherein,
preferably, an operating state of the external device comprises a first operating state and a second operating state, wherein, when the external device is in the first operating state, the PWM signal has a first duty cycle, and wherein, when the external device is in the second operating state, the PWM signal has a second duty cycle, wherein, the first duty cycle is different from the second duty cycle, and wherein,
optionally the first operating state is a normal working state, and the second operating state is an overtemperature protection state.

6. The battery pack (100) as claimed in claim 1, **characterized in that** the battery pack (100) further comprises a display device configured to receive a type and/or operating state of the external device from the control device (141) and display same to a user.

7. The battery pack (100) as claimed in claim 1, **characterized in that** the battery pack (100) comprises a temperature sensor (157) for detecting temperature information about the battery pack, wherein the temperature sensor (157) is electrically connected to the temperature terminal (156) and configured to transmit the temperature information to the temperature terminal (156).

8. A power tool system, **characterized in that** it comprises the battery pack (100) as claimed in any one of claims 1-7, and an external device configured to be operable to be electrically connected to the battery pack for power supply or charging.

9. A communication system for communication between a first device (100) and a second device, **characterized in that** the communication system comprises a temperature terminal (156) in the first device (100),
wherein the communication system is configured such that when the first device (100) is electrically connected to the second device, the second device can control the temperature terminal (156) to detect the temperature of the first device (100), and,
wherein the communication system is further configured to, when in the electrical connection state, allow the first device (100) to receive a PWM signal from the second device through the temperature terminal (156), and determine the type and/or operating state of the second device on the basis of the PWM signal received from the second device.

10. The communication system as claimed in claim 9, **characterized in that** the communication system comprises a storage device (142) and a control device (141) in the first device (100),
wherein the storage device (142) stores a list composed of predetermined PWM signals and predetermined corresponding relationships between different PWM signals and different types and/or operating states of the second device, and,
wherein the control device (141) is configured to compare a PWM signal received from the second device through the temperature terminal (156) with a PWM signal stored in the list in the storage device (142) and determine the type and operating state of the second device on the basis of a comparison result.

11. The communication system as claimed in claim 9, **characterized in that** the communication system is configured to enable the second device to, in each cycle of the PWM signal, perform temperature detection during a high voltage level and perform no temperature detection during a low voltage level.

12. The communication system as claimed in claim 9, **characterized in that** the frequency of the PWM signal is associated with the type of the second device, wherein,
preferably, the second device comprises a second device of a first type and a second device of a second type, wherein, when the second device is of the first type, the PWM signal has a first frequency, and wherein, when the second device is of the second type, the PWM signal has a second frequency, wherein, the first frequency is different from the second frequency, and wherein,
optionally, the second device of a first type is an electrical device (200) that obtains power from the first device, and the second device of a second type is a charging device (300) that charges the first device, or optionally, the second device of a first type is a first electrical device that obtains power from the first device, and the second device of a second type is a second electrical device that obtains power from the first device.

13. The communication system as claimed in claim 9, **characterized in that** the duty cycle of the PWM signal is associated with the operating state of the second device, wherein,
preferably, an operating state of the second device comprises a first operating state and a second operating state, wherein, when the second device is in the first operating state, the PWM signal has a first duty cycle, and wherein, when the second device is in the second operating state, the PWM signal has a second duty cycle, wherein, the first duty cycle is different from the second duty cycle, and wherein,
optionally, the first operating state is a normal working state, and the second operating state is an overtemperature protection state.

14. The communication system as claimed in claim 9, **characterized in that** the communication system further comprises a display device in the first device (100), configured to receive a type and an operating state of the second device from the control device (141) and display same to a user.

15. The communication system as claimed in claim 9, **characterized in that** the communication system comprises a temperature sensor (157) in the first device (100) for detecting temperature information about the first device, wherein the temperature sensor (157) is electrically connected to the temperature terminal (156) and configured to transmit the temperature information to the temperature terminal (156).
